# EUROPÄISCHE PATENTSCHRIFT

(11) **EP 2 028 329 B1**
(45) Veröffentlichungstag und Bekanntmachung des Hinweises auf die Patenterteilung: **15.02.2012**
(21) Anmeldenummer: 08019195.0
(22) Anmeldetag: 17.08.2007
(51) Int. Cl.: E04B 2/16, C04B 38/06

(54) **Wärmedämmziegel**
Heat insulation bricks
Brique isolante

(30) Priorität: 18.08.2006 DE 202006012748 U
(43) Veröffentlichungstag der Anmeldung: 25.02.2009
(62) Teilanmeldung aus: 07016177.3
(73) Patentinhaber: Schlagmann Baustoffwerke GmbH & Co. KG, 84367 Zeilarn (DE)
(72) Erfinder: Edmüller, Johannes, 84367 Zeilarn (DE)
(74) Vertreter: Wiedemann, Peter

(56) Entgegenhaltungen:
- EP-A- 0 201 757
- EP-A- 0 984 110
- DE-A1- 2 908 466
- DE-A1- 19 637 977
- DE-A1- 19 732 518
- DE-U1-202005 000 723

## Beschreibung

### Technisches Gebiet

Die Erfindung betrifft einen Wärmedämmziegel.

### Stand der Technik

Wärmedämmziegel aus einem gebrannten Ziegelmaterial mit einer Mehrzahl von Hochlöchern sind hinlänglich bekannt. Diese müssen eine Vielzahl von Anforderungen erfüllen, beispielsweise hinsichtlich Wärmedämmung, Schalldämmung, Standsicherheit, Brandschutz etc., die teilweise im Widerspruch zueinander stehen. Die steigenden Anforderungen an eine gute Wärmedämmung haben mehr und mehr dazu geführt, dass bekannte Wärmedämmziegel immer filigraner ausgeführt wurden, um die Wärmedurchgangsflächen und somit den Wärmedurchgang zu minimieren. Hierdurch wird jedoch nicht nur die Tragfähigkeit, sondern auch das Schalldämmmaß beeinträchtigt, sodass sich derartige Ziegel nicht für alle Anwendungen eignen.

Ferner offenbart die DE 197 32 518 A1 einen Ziegelstein, dem ein hochporöses Blähglasgranulat beigefügt wird. Darüber hinaus offenbart die DE 20 2005 000 723 U1 einen Wärmedämmziegel, der in unterschiedlichen Bereichen seines Querschnitts unterschiedlich große Bruchlöcher aufweist.

### Darstellung der Erfindung

Es ist daher Aufgabe der Erfindung, einen gattungsgemäßen Wärmedämmziegel bereitzustellen, der bei guter Wärmedämmung auch eine gute Schalldämmung ermöglicht.

Diese Aufgabe wird erfindungsgemäß durch einen Wärmedämmziegel nach Anspruch 1 gelöst. Besonders vorteilhafte Weiterbildungen der Erfindung sind Gegenstand der abhängigen Ansprüche.

Der Erfindung liegt der Gedanke zugrunde, bei der Verbesserung der Wärmedämmung des Wärmedämmziegels nicht nur an dessen Geometrie, sondern auch an dessen Materialeigenschaften anzusetzen. Vor diesem Hintergrund ist erfindungsgemäß vorgesehen, dass das gebrannte Ziegelmaterial des Wärmedämmziegels eine Wärmeleitfähigkeit von höchstens 0,27 W/(m*K) aufweist. Hierdurch wird es möglich, beispielsweise bei einem bekannten Wärmedämmziegel die Stegbreiten zu erhöhen, sodass sich ein deutlich verbesserter Schallschutz ergibt, und zwar insgesamt ohne Verschlechterung der Wärmedämmeigenschaften. Hierdurch lässt sich ein Wärmedämmziegel bereitstellen, der einen deutlich größeren Anwendungsbereich besitzt.

Die erfindungsgemäße Verminderung der Wärmeleitfähigkeit kann im Rahmen der Erfindung auf unterschiedlichste Art und Weise erfolgen. Erfindungsgemäß ergibt sich die verbesserte (verminderte) Wärmeleitfähigkeit aus einer erhöhten Porosierung des gebrannten Ziegelmaterials. Zu diesem Zweck ist gemäß der vorliegenden Erfindung vorgesehen, dass das Ziegelmaterial 15 bis 36 Volumen-%, bevorzugt 19 bis 29 Volumen-% porosierendes Material, bevorzugt Kunststoffmaterial aufweist. Dieses Material verbrennt beim Brennvorgang des Ziegels zumindest teilweise und hinterlässt eine entsprechende Porosierung.

Dabei hat es sich im Hinblick auf eine gleichmäßige Porosierung als vorteilhaft erwiesen, dass das porosierende (Kunststoff-)Material einen Korndurchmesser von höchstens 1,5 mm aufweist.

Das porosierende (Kunststoff-)Material kann im Rahmen der vorliegenden Erfindung aus einer Vielzahl unterschiedlicher Stoffe ausgewählt sein. Im Hinblick auf eine einfache Verarbeitung und eine hohe Dauerhaftigkeit hat es sich jedoch als vorteilhaft erwiesen, dass das porosierende (Kunststoff-) Material ausgewählt ist aus Styropor, Maismehlgranulat und Kohlegranulat.

Weitere Maßnahmen, die eine Verbesserung (Verminderung) der Wärmeleitfähigkeit ermöglichen, ohne die übrigen Eigenschaften des Wärmedämmziegels zu beeinträchtigen oder die Herstellung aufwändiger zu machen, sind Gegenstand der Ansprüche 4 bis 6. Dabei ist zu beachten, dass unter "Ziegelmaterial" im Rahmen der vorliegenden Erfindung, soweit nicht anders angegeben, das ungebrannte Material zu verstehen ist.

Obgleich der erfindungsgemäße Wärmedämmziegel bereits unverfüllt eine ausgezeichnete Wärmedämmung bietet, ist gemäß der Erfindung vorgesehen, dass zumindest eines der Hochlöcher zumindest teilweise mit einem Wärmedämmmaterial verfüllt ist. Hierdurch lassen sich die Wärmedämmungseigenschaften weiter optimieren, und zwar bei gleichzeitiger Verbesserung des Schalldämmmaßes, da das Wärmedämmmaterial auch dämpfende Eigenschaften besitzt.

Auf diese Weise eröffnen sich in Kombination mit den erfindungsgemäßen Eigenschaften des Ziegelmaterials völlig neuartige Einsatzgebite für den erfindungsgemäßen Wärmedämmziegel. Hierdurch lassen sich beispielsweise Wärmedämmziegel bereitstellen, die auch bei sehr geringer Breite ein ausreichendes Wärmedämmvermögen aufweisen. Derartige, schmale Wärmedämmziegel eignen sich hervorragend zur Herstellung eine hochwärmedämmenden, nachträglichen Ziegelfassade bei Altbauten, da sie wenig Bauraum beanspruchen und das Gesamterscheinungsbild des Gebäudes kaum verändern, insbesondere im Bereich von Fenstern, Türen etc. Dies gilt insbesondere, wenn das Wärmedämmmaterial ausgewählt ist aus Perlite-Leichtzuschlag, Nanogel, hochdisperser Kieselsäure (HDK), Vakuumisolationselementen, Infrarotblocker und Kombinationen hiervon.

Der erfindungsgemäße Wärmedämmziegel ermöglicht somit, erstmals in Einsatzbereiche der Gebäudesanierung vorzudringen, die bisher sogenannten Wärmedämmverbundsystemen und dergleichen vorbehalten waren. Dabei lassen sich durch den erfindungsgemäßen Wärmedämmziegel wesentliche Nachteile von Wärmedämmverbundsystemen vermeiden, wie beispielsweise Tauwasserausfall mit nachfolgender Putzabplatzung, Neigung zur Veralgung, Brandrisiko, Rissbildungen und geringe mechanische Stabilität. Nicht zuletzt ermöglichen die erfindungsgemäßen Wärmedämmziegel ein angenehmeres Wohnklima als viele Wärmedämmverbundsysteme.

Gemäß einer Weiterbildung der Erfindung ist vorgesehen, dass HDK als Schüttgut mit oder ohne Umhüllung in mindestens einem Hochloch angeordnet ist. Hierdurch ergibt sich ein besonders wirtschaftlicher und zuverlässiger Herstellungsvorgang. Dabei ist es bevorzugt, dass die HDK eine Dichte von mindestens 100 kg/m³, bevorzugt mindestens 120 kg/m³ besitzt, so dass der fertig gestellte Wärmedämmziegel bei Bedarf zugeschnitten werden kann, beispielsweise für den Rand- und Eckbereich von Wänden.

Gemäß einer Weiterbildung der Erfindung ist ferner vorgesehen, dass der Wärmedämmziegel eine Mehrzahl von Querstegen aufweist, die sich im wesentlichen parallel zu den Stoßflächen erstrecken, wobei die Summe der Querstegdicken höchstens 80 mm/m, bevorzugt höchstens 60 mm/m beträgt. Hierdurch lassen die die Wärmedämmeigenschaften weiter optimieren, bzw. der Wärmedämmziegel knn bei gleicher Wärmedämmung noch schmaler ausgeführt werden, so dass er sich noch besser für die nachträgliche Wärmedämmung von Gebäude(außen)wänden eignet.

Dabei ist es besonders bevorzugt, dass mindestens ein Quersteg nach dem Brennen eines Rohlings für den Wärmedämmziegel entfernt ist. Auf diese Weise lassen sich gute Wärmedämmeigenschaften mit einem stabilen Strangpressen, abtrennen und Brennen eines Ziegelrohlings vereinen.

Gemäß einer Weiterbildung der Erfindung ist vorgesehen, dass der Wärmedämmziegel in Richtung senkrecht zu den Stoßflächen eine Länge von mindestens 400 mm, bevorzugt mindestens 500 mm, und/oder dass er in Richtung parallel zu den Stoßflächen eine Breite von höchstens 160 mm, bevorzugt höchstens 130 mm besitzt. Mit diesen Abmessungen stellt die vorliegende Erfindung einen Wärmedämmziegel bereit, der sich bei guten Wärmedämmeigenschaften optimal für den Einsatz für die nachträgliche Wärmedämmung von Gebäude(außen)wänden eignet. Ferner bezieht sich die vorliegende Erfindung nicht nur auf einen Wärmedämmziegel, sondern auch auf einen Rohling hierfür, wie er unmittelbar vor dem Brennvorgang vorliegt.

Gemäß einer weiteren Zielrichtung der Erfindung wird ein Verfahren zum Wärmedämmen von Gebäuden unter Einsatz eines erfindungsgemäßen Wärmedämmziegels nach Anspruch 11 bereitgestellt. Mit diesem Verfahren lassen sich die oben diskutierten Vorteile einer nachträgliche Wärmedämmung von Gebäude(außen)wänden mittels des erfindungsgemäßen Wärmedämmziegels besonders vorteilhaft erzielen.

Dabei ist es besonders bevorzugt, dass die Wärmedämmziegel mit der Außenseite der Außenwand über Verankerungselemente und/oder Haftmittel verbunden werden, um einen stabilen Verbund und eine dauerhafte Wärmedämmung zu erzielen. Ferner ist gemäß einer Weiterbildung der Erfindung vorgesehen, dass die Außenseite der Außenwand vor dem Anordnen der Wärmedämmziegel mit einer Egalisationsschicht versehen wird. Auch dies trägt nicht nur zu einer stabilen und dauerhaften Ziegelschale, sondern auch zu einer günstigen Wärmedämmung bei.

### Kurze Beschreibung der Zeichnungen

Fig. 1 zeigt schematisch eine Draufsicht einer Ausführungsform des erfindungsgemäßen Wärmedämmziegels;
Fig. 2 zeigt schematisch eine Draufsicht einer weiteren Ausführungsform des erfindungsgemäßen Wärmedämmziegels;
Fig. 3 zeigt schematisch eine Perspektivansicht einer mit erfindungsgemäßen Wärmedämmziegeln nachträglich gedämmte Außenwand.

### Ausführliche Beschreibung bevorzugter Ausführungsformen

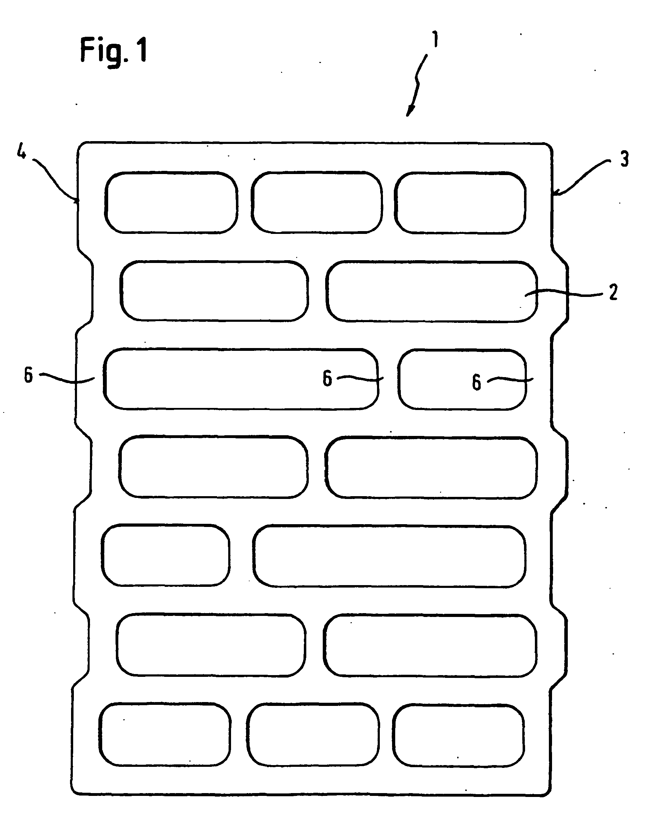

Bevorzugte Ausführungsformen der vorliegenden Erfindung werden nachfolgend ausführlich unter Bezugnahme auf Fig. 1 bis 3 beschrieben.

Fig. 1 zeigt schematisch eine Draufsicht eines Wärmedämmziegels 1 als bevorzugte Ausführungsform der vorliegenden Erfindung. Der Wärmedämmziegel besteht aus einem gebrannten Ziegelmaterial und dient zur Erstellung von Mauerwerkstragwerken für Gebäude insbesondere Wänden und dergleichen.

Wie in Fig. 1 zu erkennen ist, besitzt der Wärmedämmziegel eine Mehrzahl von Hochlöchern, die dazu vorgesehen sind, im eingebauten Zustand im Wesentlichen vertikal angeordnet zu sein. Ferner besitzt der Wärmedämmziegel in bekannter Weise zwei gegenüberliegende Stoßflächen 3, 4, in denen jeweils eine Verzahnung mit Vorsprüngen bzw. Vertiefungen vorgesehen ist.

Das Ziegelmaterial des erfindungsgemäßen Wärmedämmziegels ist derart ausgewählt, dass es im gebrannten Zustand eine Wärmeleitfähigkeit von höchstens 0,27 W/(m*K) besitzt, wobei in der vorliegenden Ausführungsform eine Wärmeleitfähigkeit von 0,26 W/(m*K) vorliegt. Die Wärmeleitfähigkeit ist dabei an aus dem Wärmedämmziegel herausgeschnittenen Probekörpern (Ziegelscherben) nach DIN 52612-1: 1979/09 - Bestimmung der Wärmeleitfähigkeit mit dem Plattengerät; Durchführung und Auswertung - zu bestimmen.

Obgleich in Fig. 1 nicht gezeigt, können zumindest einige der Hochlöcher 2 vollständig oder teilweise mit einem Wärmedämmmaterial verfüllt sein, das beispielsweise aus einem Perlit-Leichtzuschlag oder einem anderen geeigneten Wärmedämmmaterial bestehen kann.

Um dies zu erreichen, kann als Ausgangsmaterial (vor dem Brennen) beispielsweise eine Standard-Tonbetriebsmasse mit folgenden Zusätzen verwendet werden:
- 20 Volumen-% porosierendes Kunststoffmaterial mit einer Korngröße von höchstens 1,5 mm;
- 6 Volumen-% Kalziumcarbonat;
- 1 Volumen-% Kohlenstoff;
- 5 Volumen-% Bindeton.

Durch diese Zusätze ergibt sich eine vorteilhaft verteilte Scherbenporosierung über den Nano-Mikro- und Millimeterbereich.

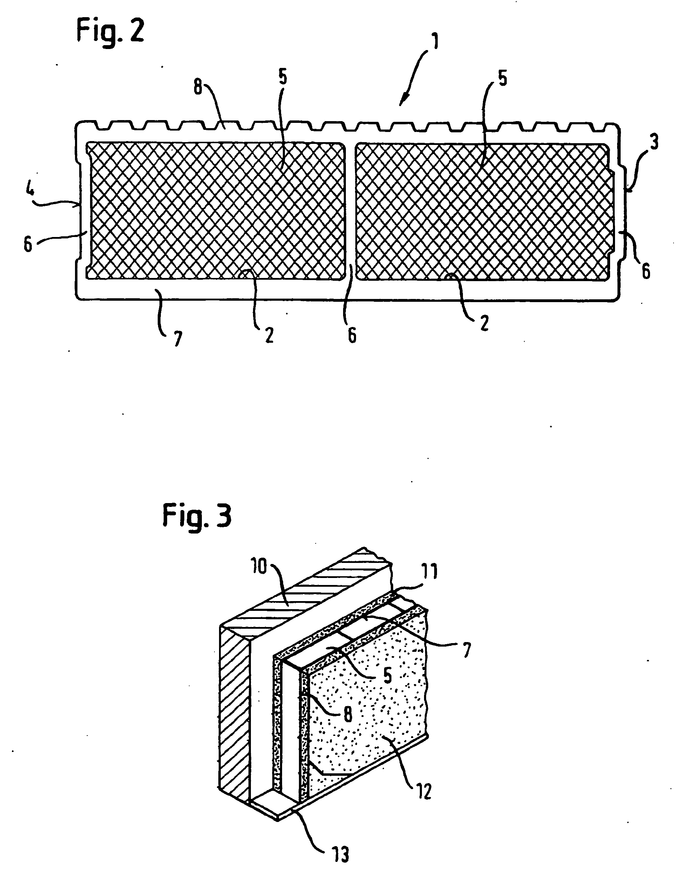

Eine zweite bevorzugte Ausführungsform des erfindungsgemäßen Wärmedämmziegels ist schematisch in Fig. 2 in einer Draufsicht gezeigt. Diese unterscheidet sich primär durch seine Abmessungen und die Anzahl der Hochlöcher 2 von dem in Fig. 1 gezeigten Wärmedämmziegel. Wie in Fig. 2 zu erkennen ist, weist der Wärmedämmziegel 1 in der vorliegenden Ausführungsform zwei Hochlöcher auf, wobei es im Rahmen der vorliegenden Erfindung ebenso möglich ist, dass der Wärmedämmziegel lediglich ein großes Hochloch 2 aufweiset, beispielsweise indem einer der Querstege 6 nach dem Brennen entfernt wird. Auf diese Weise kann bei dem gezeigten Wärmedämmziegel 1 eine sehr geringe Gesamtsumme der Querstegdicken erzielt werden, die in der vorliegenden Ausführungsform 60 mm/m beträgt. Dabei betragen die Gesamtabmessungen des Wärmedämmziegels 1 in der vorliegenden Ausführungsform 500 mm x 130 mm (Länge x Breite), sodass sich der Wärmedämmziegel besonders gut für die nachträgliche Wärmedämmung von Gebäudeaußenwänden eignet.

Um auch bei einem derart schmalen Wärmedämmziegel ausreichende Wärmedämmeigenschaften zu erzielen, sind die Hochlöcher 2 des Wärmedämmziegels 1 mit einem Wärmedämmmaterial 5 verfüllt, das in der vorliegenden Ausführungsform ausgewählt ist aus Perlit-Leichtzuschlag, Nanogel, hochdisperser Kieselsäure (HDK), Vakuumisolationselementen, Infrarotblocker und Kombinationen hiervon. Genauer gesagt ist in der vorliegenden Ausführungsform HDK als Schüttgut mit einer sackartigen Umhüllung in dem jeweiligen Hochloch 2 angeordnet und besitzt eine Dichte von 130 kg/m³, sodass der Wärmedämmziegel bei Bedarf auch zugeschnitten werden kann.

Der Wärmedämmziegel 1 kann im Rahmen der vorliegenden Erfindung selbstverständlich zur Neuherstellung von Wänden oder anderen Gebäudeteilen verwendet werden. Ein besonders vorteilhafter Einsatz des erfindungsgemäßen Wärmedämmziegels ist jedoch in Fig. 3 schematisch dargestellt. Dabei wird der Wärmedämmziegel 1 zum nachträglichen Wärmedämmen einer bestehenden Außenwand 10 eines Gebäudes verwendet. Hierbei wird wie folgt vorgegangen.

Zunächst wird überprüft, ob die Außenwand 10 eine gleichmäßige Oberfläche besitzt, und es wird gegebenenfalls eine Egalisationsschicht 11 auf die Außenwand 10 aufgebracht. Anschließend wird eine Sockelschiene 13 im unteren Bereich der Außenwand 10 montiert, die als Träger für die aufzumauernden Wärmedämmziegel 1 dient. Anschließend werden die Wärmedämmziegel 1 aufgemauert, wobei die Wärmedämmziegel 1 über verschiedne Verankerungselement wie Haken, Konsolen und dergleichen mit der Außenwand 10 verbunden werden können. Alternativ oder zusätzlich ist es ebenso möglich, die Innenseite 7 der Wärmedämmziegel 1 mittels einer Mörtel- oder Kleberschicht mit der Außenwand 10 bzw. Egalisationsschicht 11 zu verbinden.

Anschließend wird die Außenseite 8 mit einer Leichtputzschicht versehen, sodass sich eine fertige, nachträglich wärmegedämmte Außenwand mit einem ausgezeichneten Wärmedämmvermögen und sehr guten bauphysikalischen und baubiologischen Eigenschaften ergibt.

## Patentansprüche

1. Wärmedämmziegel (1) aus einem gebrannten Ziegelmaterial, mit einem oder einer Mehrzahl von Hochlöchern (2) und mindestens zwei Stoßflächen (3, 4), wobei
das gebrannte Ziegelmaterial eine Wärmeleitfähigkeit von höchstens 0,27 W/(m*K), bevorzugt höchstens 0,26 W/(m*K) aufweist,
das Ziegelmaterial 15 bis 36 Volumen-%, bevorzugt 19 bis 29 Volumen-% porosierendes Material aufweist,
das porosierende Material einen Korndurchmesser von höchstens 1,5 mm aufweist, und
**dadurch gekennzeichnet, dass**
in den mindestens zwei Stoßflächen (3, 4) jeweils eine Verzahnung vorgesehen ist,
das porosierende Material beim Brennvorgang zunächst teilweise verbrennbar ist, und
zumindest eines der Hochlöcher (2) zumindest teilweise mit einem Wärmedämmmaterial (5) verfüllt ist.

2. Wärmedämmziegel nach Anspruch 1, **dadurch gekennzeichnet, dass** das gebrannte Ziegelmaterial eine Wärmeleitfähigkeit von mindestens 0,22 W/(m*K), bevorzugt mindestens 0,24 W/(m*K) aufweist.

3. Wärmedämmziegel nach einem der vorhergehenden Ansprüche 1 oder 2, **dadurch gekennzeichnet, dass** das porosierende Material ausgewählt ist aus Kunststoff, insbesondere Styropor, sowie Maismehlgranulat und Kohlegranulat.

4. Wärmedämmziegel nach einem der vorhergehenden Ansprüche, **dadurch gekennzeichnet, dass** das Ziegelmaterial 4 bis 8 Volumen-%, bevorzugt 5 bis 7 Volumen-% Kalziumkarbonat aufweist.

5. Wärmedämmziegel nach einem der vorhergehenden Ansprüche, **dadurch gekennzeichnet, dass** das Ziegelmaterial 0,5 bis 1,5 Volumen-%, bevorzugt 0,8 bis 1,2 Volumen-% Kohlenstoff aufweist.

6. Wärmedämmziegel nach einem der vorhergehenden Ansprüche, **dadurch gekennzeichnet, dass** das Ziegelmaterial 3 bis 7 Volumen-%, bevorzugt 4 bis 6 Volumen-% Bindeton aufweist.

7. Wärmedämmziegel nach einem der vorhergehenden Ansprüche, **dadurch gekennzeichnet, dass** das Wärmedämmmaterial ausgewählt ist aus Perlite-Leichtzuschlag, Nanogel, hochdisperser Kieselsäure (HDK), Vakuumisolationselementen, Infrarotblocker und Kombinationen hiervon.

8. Wärmedämmziegel nach Anspruch 7, **dadurch gekennzeichnet, dass** HDK als Schüttgut mit oder ohne Umhüllung in mindestens einem Hochloch (2) angeordnet ist und bevorzugt eine Dichte von mindestens 100 kg/m³, bevorzugt mindestens 120 kg/m³ besitzt.

9. Wärmedämmziegel nach einem der vorhergehenden Ansprüche, **dadurch gekennzeichnet, dass** er eine Mehrzahl von Querstegen (6) aufweist, die sich im wesentlichen parallel zu den Stoßflächen (3, 4) erstrecken, wobei die Summe der Querstegdicken höchstens 80 mm/m, bevorzugt höchstens 60 mm/m beträgt, wobei bevorzugt mindestens ein Quersteg nach dem Brennen eines Rohlings entfernt ist.

10. Wärmedämmziegel nach einem der vorhergehenden Ansprüche, **dadurch gekennzeichnet, dass** er in Richtung senkrecht zu den Stoßflächen (3, 4) eine Länge von mindestens 400 mm, bevorzugt mindestens 500 mm, und/oder dass er in Richtung parallel zu den Stoßflächen (3, 4) eine Breite von höchstens 160 mm, bevorzugt höchstens 130 mm besitzt.

11. Verfahren zum Wärmedämmen von Gebäuden unter Einsatz eines Wärmedämmziegels (1) nach einem der vorhergehenden Ansprüche, mit den Schritten:
Überprüfen und ggf. Vorbehandeln einer Außenwand (10) eines zu dämmenden Gebäudes,
Anordnen einer Wärmedämmschale mit einer Mehrzahl von Wärmedämmziegeln (1) nach einem der vorhergehenden Ansprüche auf einer Außenseite der Außenwand.

12. Verfahren nach Anspruch 11, **dadurch gekennzeichnet, dass** die Wärmedämmziegel mit der Außenseite der Außenwand über Verankerungselemente und/oder Haftmittel verbunden werden.

13. Verfahren nach Anspruch 11 oder 12, **dadurch gekennzeichnet, dass** die Außenseite der Außenwand vor dem Anordnen der Wärmedämmziegel mit einer Egalisationsschicht (11) versehen wird.

## Claims

1. Heat-insulating brick (1) made from a fired brick material, having one or a plurality of vertical perforations (2) and at least two abutting surfaces (3, 4), wherein
the fired brick material has a thermal conductivity of not more than 0.27 W/(m*K), preferably not more than 0.26 W/(m*K),
the brick material has 15 to 36 volume%, preferably 19 to 29 volume%, of porous-making material,
the porous-making material has a grain diameter of not more than 1.5 mm, and
**characterised in that**
in the at least two abutting surfaces (3, 4), in each case teeth are provided,
the porous-making material can be combusted first of all partly during the firing process, and
at least one of the vertical perforations (2) is filled at least partly with a heat-insulating material (5).

2. Heat-insulating brick according to claim 1, **characterised in that** the fired brick material has a thermal conductivity of at least 0.22 W/(m*K), preferably at least 0.24 W/(m*K).

3. Heat-insulating brick according to one of the preceding claims 1 or 2, **characterised in that** the porous-making material is selected from synthetic material, in particular polystyrene, and corn meal granules and carbon granules.

4. Heat-insulating brick according to one of the preceding claims, **characterised in that** the brick material has 4 to 8 volume%, preferably 5 to 7 volume%, of calcium carbonate.

5. Heat-insulating brick according to one of the preceding claims, **characterised in that** the brick material has 0.5 to 1.5 volume%, preferably 0.8 to 1.2 volume%, of carbon.

6. Heat-insulating brick according to one of the preceding claims, **characterised in that** the brick material has 3 to 7 volume%, preferably 4 to 6 volume%, of bonding clay.

7. Heat-insulating brick according to one of the preceding claims, **characterised in that** the heat-insulating material is selected from perlite lightweight aggregate, nanogel, highly dispersed silicic acid (HDK), vacuum-insulating elements, infrared blockers and combinations thereof.

8. Heat-insulating brick according to claim 7, **characterised in that** HDK as bulk material with or without coating is arranged in at least one vertical perforation (2) and preferably has a density of at least 100 kg/m³, preferably at least 120 kg/m³.

9. Heat-insulating brick according to one of the preceding claims, **characterised in that** it has a plurality of transverse bars (6) which extend essentially parallel to the abutting surfaces (3, 4), wherein the sum of the transverse bar thicknesses is not more than 80 mm/m, preferably not more than 60 mm/m, wherein preferably at least one transverse bar is removed after firing a blank.

10. Heat-insulating brick according to one of the preceding claims, **characterised in that** in a direction vertically to the abutting surfaces (3, 4) it has a length of at least 400 mm, preferably at least 500 mm, and/or **in that** in a direction parallel to the abutting surfaces (3, 4) it has a width of not more than 160 mm, preferably not more than 130 mm.

11. Method for heat insulation of buildings using a heat-insulating brick (1) according to one of the preceding claims, having the steps:
checking and optionally pre-treating an outer wall (10) of a building to be insulated,
arranging a heat-insulating shell having a plurality of heat-insulating bricks (1) according to one of the preceding claims on an outer side of the outer wall.

12. Method according to claim 11, **characterised in that** the heat-insulating bricks are joined to the outer side of the outer wall via anchoring elements and/or adhesives.

13. Method according to claim 11 or 12, **characterised in that** the outer side of the outer wall is provided with a levelling layer (11) before arrangement of the heat-insulating bricks.

## Revendications

1. Brique thermo-isolante (1), composée d'un matériau de brique cuit, avec un, ou une pluralité de trous verticaux (2) et au moins deux surfaces de joint (3, 4), dans lequel :
le matériau de brique cuit présente une conductivité thermique maximale de 0,27 W/(m*K), de préférence maximale de 0,26 W/(m*K),
le matériau de brique présente de 15 à 36 % en volume, de préférence de 19 à 29 % en volume de matériau porogène,
le matériau porogène présente un diamètre de grain maximal de 1,5 mm, et
**caractérisée en ce que**,
dans chacune des au moins deux surfaces de joint (3, 4), est prévue une denture,
le matériau porogène est d'abord partiellement combustible dans le cas d'un processus de cuisson-combustion, et
au moins l'un des trous verticaux (2) est au moins partiellement rempli d'un matériau thermo-isolant (5).

2. Brique thermo-isolante selon la revendication 1, **caractérisée en ce que** le matériau de brique cuit présente une conductivité thermique minimale de 0,22 W/(m*K), de préférence minimale de 0,24 W/(m*K).

3. Brique thermo-isolante selon l'une des revendications précédentes 1 ou 2, **caractérisée en ce que** le matériau porogène est sélectionné parmi une matière synthétique, en particulier du polystyrène expansé, ainsi que du granulat de farine de maïs et du granulat de charbon.

4. Brique thermo-isolante selon l'une des revendications précédentes, **caractérisée en ce que** le matériau de brique présente de 4 à 8 % en volume, de préférence de 5 à 7 % en volume de carbonate de calcium.

5. Brique thermo-isolante selon l'une des revendications précédentes, **caractérisée en ce que** le matériau de brique présente de 0,5 à 1,5 % en volume, de préférence de 0,8 à 1,2 % en volume de carbone.

6. Brique thermo-isolante selon l'une des revendications précédentes, **caractérisée en ce que** le matériau de brique présente de 3 à 7 % en volume, de préférence de 4 à 6 % en volume de liant à l'argile.

7. Brique thermo-isolante selon l'une des revendications précédentes, **caractérisée en ce que** le matériau thermo-isolant est sélectionné parmi un additif léger à la perlite, un nanogel, l'acide silicique fortement dilué (HDK), des éléments d'isolation par le vide, des bloquants des infrarouges et des combinaisons de ceux-ci.

8. Brique thermo-isolante selon la revendication 7, **caractérisée en ce que** le HDK est disposé sous forme de produit en vrac, avec ou sans enveloppement, dans au moins un trou vertical (2), et présente de préférence une masse volumique d'au moins 100 kg/m³, de préférence d'au moins 120 kg/m³.

9. Brique thermo-isolante selon l'une des revendications précédentes, **caractérisée en ce qu'**elle présente une pluralité de nervures transversales (6), s'étendant sensiblement parallèlement aux surfaces de joint (3, 4), la somme des épaisseurs des nervures transversales étant au maximum de 80 mm/m, de préférence au maximum de 60 mm/m, sachant que, de préférence, au moins une nervure transversale est enlevée après cuissons d'une ébauche.

10. Brique thermo-isolante selon l'une des revendications précédentes, **caractérisée en ce que**, dans une direction perpendiculaire aux surfaces de joint (3, 4), elle présente une longueur minimale de 400 mm, de préférence minimale de 500 mm, et/ou **en ce que**, dans une direction parallèle aux surfaces de joint (3, 4), elle présente une largeur maximale de 160 mm, de préférence maximale de 130 mm.

11. Procédé d'isolation thermique de bâtiments, avec utilisation d'une brique thermo-isolante (1) selon l'une des revendications précédentes, comprenant les étapes consistant à :
vérifier et, le cas échéant, prétraiter une paroi extérieure (10) d'un bâtiment à isoler,
agencer une coque thermo-isolante, avec une pluralité de briques thermo-isolantes (1) selon l'une des revendications précédentes, sur une face extérieure de la paroi extérieure.

12. Procédé selon la revendication 11, **caractérisé en ce que** les briques thermo-isolantes sont reliées à la face extérieure de la paroi extérieure, par l'intermédiaire d'éléments d'ancrage et/ou de moyens d'accrochage.

13. Procédé selon la revendication 11 ou 12, **caractérisé en ce que** la face extérieure de la paroi extérieure est munie d'une couche d'égalisation (11) avant agencement des briques thermo-isolantes.
